# EUROPÄISCHE PATENTSCHRIFT

(11) **EP 3 267 846 B1**
(45) Veröffentlichungstag und Bekanntmachung des Hinweises auf die Patenterteilung: **12.06.2019**
(21) Anmeldenummer: 16710418.1
(22) Anmeldetag: 11.03.2016
(51) Int. Cl.: A47C 20/04, B29C 65/60, B29C 65/00

(54) **MÖBELANTRIEB**
FURNITURE DRIVE
ENTRAÎNEMENT POUR MEUBLE

(30) Priorität: 13.03.2015 DE 202015101319 U
(43) Veröffentlichungstag der Anmeldung: 17.01.2018
(73) Patentinhaber: DewertOkin GmbH, 32278 Kirchlengern (DE)
(72) Erfinder: KLIMM, Hartmut, 32257 Bünde (DE); DÜCK, Heinrich, 32339 Espelkamp (DE)
(74) Vertreter: Kleine, Hubertus
(86) Internationale Anmeldenummer: PCT/EP2016/055370
(87) Internationale Veröffentlichungsnummer: WO 2016/146550

(56) Entgegenhaltungen:
- DE-U1-202012 104 376
- FR-A- 1 587 657
- GB-A- 2 210 352
- JP-A- 2005 267 818

## Beschreibung

Die Erfindung betrifft einen Möbelantrieb zur Verstellung von mindestens einem Möbelteil eines Möbels mit mindestens einer Antriebseinheit und mit einem Gehäuse.

Derartige elektromotorische Möbelantriebe werden eingesetzt, um Möbelteile wie beispielsweise ein Kopfteil oder ein Fußteil eines Lattenrostes oder auch eine Rückenlehne oder eine Fußstütze eines Sessels elektromotorisch verstellen zu können. Die Möbelantriebe können z.B. als Einzelantriebe mit einer Antriebseinheit oder als Doppelantriebe mit zwei Antriebseinheiten ausgebildet sein. Doppelantriebe können auf einfache Weise am Möbel, beispielsweise dem genannten Lattenrost eines Bettes, montiert werden, indem jeweils eine Schwenkachse des Möbels in jeweils eine am Möbelantrieb ausgebildete Achsaufnahme eingesetzt wird. Zu diesem Zweck sind die Achsaufnahmen üblicherweise mit Abdeckschiebern versehen, die entnommen werden können, um die Schwenkachse mit einem Schwenkhebel in die Achsaufnahme einlegen zu können. Nach Wiederaufsetzen der Abdeckschieber ist der gesamte Doppelantrieb an den Achsen festgelegt. Die Antriebseinheiten wirken unabhängig voneinander über ihren Spindelantrieb und den Druckschieber auf den jeweiligen Schwenkhebel zur Verstellung der Möbelteile.

Ein derartiger Möbelantrieb, ausgebildet als Doppelantrieb, ist aus der Druckschrift EP 2 001 340 B1 bekannt. Er weist ein zweiteiliges Kunststoffgehäuse auf, wobei die Gehäuseteile nicht wie zuvor üblich miteinander verschraubt sind, sondern miteinander entlang ihrer Stoßflächen thermisch verschweißt sind. Nachteilig ist dabei, dass die Stoßflächen der Gehäuseteile vor dem Zusammenfügen erwärmt werden, während sie bereits mit den mechanischen, elektrischen und/oder elektronischen Komponenten des Möbelantriebs bestückt sind, bevor die Gehäuseteile dann zur Verbindung entlang ihrer Stoßflächen zusammengefügt werden. Insbesondere empfindliche Komponenten können dabei Schaden nehmen. Ein weiterer Möbelantrieb ist aus der Druckschrift DE 20 2012 104 376 U1 bekannt.

Es ist daher eine Aufgabe der vorliegenden Erfindung, ein Gehäuse für Komponenten eines elektromotorischen Möbelantriebs mit mindestens zwei Gehäuseteilen anzugeben, die schraubenlos und schonend miteinander verbunden sind.

Diese Aufgabe wird durch einen elektromotorischen Möbelantrieb gemäß dem unabhängigen Anspruch 1 gelöst. Vorteilhafte Ausgestaltungen und Weiterbildungen sind in den abhängigen Ansprüchen angegeben.

Ein erfindungsgemäßes Gehäuse der eingangs genannten Art zeichnet sich dadurch aus, dass eines der Gehäuseteile Fortsätze aufweist, die zugeordnete Durchbrüche in dem anderen Gehäuseteil durchdringen und die durch eine thermomechanische Behandlung nach dem Zusammensetzen der Gehäuseteile verformt sind. Die verpressten Fortsätze wirken wie eingesetzte Nieten und verbinden die Gehäuseteile sicher und irreversibel. Die Fortsätze werden zwar wie beim thermischen Verschweißen entlang der Stoßflächen thermisch behandelt, dieses erfolgt jedoch in zusammengesetztem Zustand des Gehäuses, wodurch die bereits eingelegten Komponenten geschützt sind. Das Gehäuse ist damit für Antriebseinheiten des elektromotorischen Möbelantriebs geeignet und ebenso für Gehäuse für (empfindlichere) Zusatzkomponenten wie z.B. eine Handbedienung, eine Steuerung oder ein sonstiges Funktionsgerät.

In einer vorteilhaften Ausgestaltung des Gehäuses sind die Gehäuseteile Gehäusehalbschalen des elektromotorischen Möbelantriebs. Die Fortsätze können als Bolzen oder Laschen ausgebildet sein, wobei insbesondere die Laschen ein großflächiges Verbindungselement darstellen, das entsprechend hoch belastbar ist.

In einer vorteilhaften Ausgestaltung des Gehäuses sind die Fortsätze thermisch mittels Strahlungswärme oder mittels Heißgas behandelt. Heißgas bietet den Vorteil, dass es mithilfe von Verteilern, die eine Vielzahl von feinen Düsen aufweisen, Wärme punktgenau einbringen kann. Das ist zum einen im Herstellungsprozess energetisch effektiv und verhindert zum anderen ein eventuell material- oder oberflächenschädigendes Aufheizen von nicht zu verformenden Gehäuseabschnitten.

Nach dem Aufheizen werden die Fortsätze in einem heißen Zustand mechanisch verpresst, wobei das Presswerkzeug vorteilhafterweise gekühlt wird, um die Pressstellen schnell abzukühlen und so die Herstellungstaktzeit zu verkürzen.

Eine weitere und alternative thermomechanische Behandlung erfolgt unter Verwendung von Ultraschallwellen als Energiequelle zum Einbringen von Wärme in die Endbereiche der Fortsätze. Das Aufheizen und das mechanische Verpressen des Endbereichs der Fortsätze erfolgt mittels eines gemeinsamen Werkzeugs, das nachfolgend Ultraschallkopf genannt wird. Durch Aufsetzen des Ultraschallkopfes, welcher die Form zur Erzeugung eines Press- oder Nietkopfes an den Fortsatz aufweist, an den Endbereich des Fortsatzes und Einbringen von Ultraschallwellen in den Fortsatz selbst, wird der Endbereich des Fortsatzes durch die Ultraschallwellen erwärmt und bei dosierter Krafteinwirkung auf den Fortsatz erfolgt dessen Formung zu einem nietförmigen Kopf. Am Ende des Umformprozesses ist eine Abkühlphase vorgesehen, wobei die Ultraschallwellen abgeschaltet sind, der Ultraschallkopf jedoch unter Krafteinwirkung den bereits umgeformten Endbereich des Fortsatzes bis zu einem vorbestimmten Abkühlpunkt stützt.

In einer vorteilhaften Ausgestaltung des Gehäuses sind die Fortsätze verteilt entlang eines Rands der Gehäusehalbschalen angeordnet, wodurch das Gehäuse sicher geschlossen wird. Zudem können zusätzlich Fortsätze verteilt auf Seitenflächen der Gehäusehalbschalen angeordnet sein.

Die Linien- oder Flächendichte der Fortsätze ist in mechanisch stark beanspruchten Bereichen des Gehäuses erhöht, um die Verbindungsstellen gleichmäßig zu beanspruchen und einem Bruch aufgrund von Überbeanspruchung vorzubeugen. Bei Verwendung des Gehäuses für einen elektromotorischen Möbelantrieb ist dieses besonders im Bereich eines Antriebsmotors, eines Getriebes und/oder eines Abtriebsglieds sinnvoll.

Andere Gehäuse weisen ein kastenförmiges Gehäuseteil als ein erstes Gehäuseteil auf, welches durch ein deckelförmiges Gehäuseteil als weiteres Gehäuseteil zu einem Gehäuse zusammen gefügt wird.

In einer Weiterbildung des Gehäuses ist zwischen den einander zugewandten Stoßflächen ein Dichtelement zur Abdichtung des Gehäuses vorgesehen. Das Dichtelement ist der Geometrie bzw. der Anforderung an die Abdichtung angepasst. Es kann als schnurförmiges Element in einen dafür vorgesehenen Sitz eingesetzt sein. Alternative Dichtelemente sind plattenförmig oder zumindest abschnittsweise plattenförmig und flach. Die betreffenden Dichtelemente sind bevorzugt als Endlosware hergestellt. Alternative Dichtelemente sind als Formteil des Stoßflächenverlaufs korrespondierend angepasst. Eine besondere Anpassung des Dichtelements an die Stoßflächen des Gehäuses ist dadurch gebildet, wenn die Stoßflächen des Gehäuses in der Ebene verspringen und Versätze aufweisen. Andere Dichtelemente können an wenigstens einem Gehäuseteil vorgesehen sein. Dazu können sie fest angeformt sein. Alternativ können sie an ein Gehäuseteil in pastöser, flüssiger oder schaumiger Form aufgetragen sein. Idealerweise ist das Dichtelement aus einem Elastomer oder aus einem nachgiebigen Kunststoff gefertigt.

Insbesondere zur Verwendung eines Gehäuses im Pflege- und Hospitalbereich oder in feuchter Umgebung ist ein Dichtelement zur Verwendung der Abdichtung eines Gehäuses einer Handbedienung oder einer Steuerung oder eines Möbelantriebs oder eines Netzteils von Vorteil.

Die beschriebenen Gehäuseteile sind bei erfolgter Montage untereinander formschlüssig verzahnt. Die formschlüssige Verzahnung ist wenigstens durch die Fortsätze in den Durchbrüchen gebildet. Ferner können weitere formschlüssige Verzahnungen vorgesehen sein, um Kräfte von einem Gehäuseteil in ein weiteres übertragen zu können.

Ein Montageverfahren für ein derartiges Gehäuse weist die folgenden Verfahrensschritte auf:
In einem ersten Verfahrensschritt werden in wenigstens einem Gehäuseteil die darin aufzunehmenden Komponenten wie Motoren, Getriebe, Schalter, Transformatoren, gedruckte Schaltungen, etc. montiert.

In einem zweiten Verfahrensschritt erfolgt das Ansetzen eines weiteren Gehäuseteils an das wenigstens eine Gehäuseteil.

In einem dritten Verfahrensschritt erfolgt ein Fixieren der Gehäuseteile untereinander. Das ist in bevorzugter Form eine Hilfsvorrichtung, welche unter Krafteinwirkung die Gehäuseteile zusammen hält, als wäre die Komponente des elektromotorischen Möbelantriebs final montiert und als wäre der letzte Verfahrensschritt abgeschlossen.

Alternativ zur Hilfsvorrichtung können auch Hilfselemente wie Schrauben oder Klammern verwendet sein, welche die Gehäuseteile untereinander fixieren.

Das hat den Vorteil, das Gehäuse leicht weiter transportieren zu können, beispielsweise entlang einer Fertigungsstrecke.

Im Anschluss an den dritten Verfahrensschritt kann eine Funktionskontrolle der Komponente des Möbelantriebs erfolgen. Dazu ist wenigstens eine elektrische Leitung zur elektrischen Verbindung mit den Komponenten des Möbelantriebs vorgesehen. Die Leitung führt zumindest elektrische Schalt- und Datensignale, kann alternativ zusätzlich eine Hilfsenergie zumindest zum teilweisen Betreiben der Komponente führen.

In einer Ausgestaltung der Funktionskontrolle werden alle elektrischen und mechanischen Funktionen der Komponente des elektrischen Möbelantriebs angesprochen und dessen korrekte Funktion analysiert. Bei korrekter Funktion kann der nächste Verfahrensschritt eingeleitet werden.

Eine weitere und/oder ergänzende Ausgestaltung der Funktionskontrolle der Komponente des elektromotorischen Möbelantriebes ist durch die Analyse der Passgenauigkeit aller Gehäuseteile untereinander gebildet. Sind diese vollständig montierbar und als aneinander liegend detektiert, kann dies als Merkmal für eine korrekt erfolgte Montage heran gezogen werden.

In einem vierten Verfahrensschritt des Montageverfahrens erfolgt die thermomechanische Behandlung und Umformen der Fortsätze, wobei ein Erwärmen und Umformen der Endbereiche der Fortsätze erfolgt. Das Umformen erfolgt unter Beaufschlagung einer Krafteinwirkung auf den erwärmten Endbereich des Fortsatzes durch eine formgebende Geometrie des Formwerkzeuges, wobei der Endbereich des Fortsatzes einen im Gegensatz zur Ursprungsgeometrie einen nun größeren Querschnitt nach Art einer Abflachung, eines Flachkopfes oder eines Pilzkopfes einnimmt und sich somit ein Formschluss einstellt, der nicht mehr durch den Durchbruch hindurch geführt werden zu können.

Ein fünfter und letzter Verfahrensschritt der Montage ist durch den Abkühlvorgang gebildet. Die Krafteinwirkung des vierten Verfahrensschritts bleibt vorzugsweise für die Dauer des fünften Verfahrensschrittes bestehen.

Schlussendlich erfolgt die eventuelle Entnahme der Komponente des elektromotorischen Möbelantriebs jedoch zumindest der Abtransport der zusammen gefügten Gehäuseteile von der Montagevorrichtung.

Ein besonderer Vorteil gegenüber dem Stand der Technik liegt darin, vor Einleiten des vierten Verfahrensschrittes und damit noch vor der endgültigen thermomechanischen Behandlung und somit vor dem letzten Fertigungsschritt eine vollständige und qualifizierte Funktionskontrolle durchführen zu können. In diesem Zustand sind Komponente des elektromotorischen Möbelantriebs derart zu einer Einheit zusammen gesetzt, als wäre es ein fertiges Produkt, so dass die Funktionskontrolle bei realer Positionierung aller Komponenten einschließlich einer Verdrahtung im Gehäuse vorgenommen wird. Das Beseitigen eines Fehlers kann auf einfache Weise erfolgen, indem die Kette der Verfahrensschritte unterbrochen wird und ein Gehäuseteil entfernt wird, der Fehler beseitig wird und bei Verfahrensschritt eins wieder neu begonnen werden kann. Bei Auftreten einer Anomalie ist es also möglich, das Gehäuse zerstörungsfrei und ohne großen Aufwand zu öffnen und den Fehler auf einfachste Weise zu korrigieren.

Ein erfindungsgemäßer elektromotorischer Möbelantrieb der eingangs genannten Art zeichnet sich durch ein derartiges Gehäuse aus. Es ergeben sich die im Zusammenhang mit dem Gehäuse genannten Vorteile.

Ein Möbelantrieb weist wenigstens einen elektrischen Antriebsmotor mit wenigstens einem nachgeschalteten Antriebszug auf. Im Antriebszug ist wenigstens eine Getriebestufe enthalten, wobei das Abtriebsglied des Getriebezuges mit einem Möbelbauteil in Wirkverbindung steht. Die Wirkverbindung kann direkt sein. Andere Wirkverbindungen sind durch Zwischenschalten von Hebeln, Gestängen oder mechanischen Übertragungsgliedern gebildet. Bei Betrieb des elektrischen Antriebsmotors werden die damit in Wirkverbindung stehenden Möbelbauteile stufenlos verstellt und zumindest ein Möbelbauteil relativ zu einem weiteren bewegt. Eine erste Getriebestufe ist durch ein Drehzahlreduziergetriebe gebildet. Drehzahlreduziergetriebe sind als Schneckengetriebe oder als Rädergetriebe ausgebildet. Eine weitere Getriebestufe ist durch ein Umformgetriebe gebildet. In Frage kommen Gewindespindel-Spindelmutter-Hubgetriebe zum Umformen einer Drehbewegung in eine Linearbewegung. Weitere Umformgetriebe sind Hebelgetriebe, welche aus einer linearen Bewegung eine Schwenkbewegung erzeugen oder umgekehrt.

Neben dem eigentlichen Antrieb können weitere Komponenten eines elektromotorischen Möbelantriebs in einem erfindungsgemäßen Gehäuse angeordnet sein, beispielsweise eine Handbedienung, eine Steuereinrichtung oder eine Stromversorgungseinrichtung.

Eine Handbedienung weist mindestens zwei Gehäuseteile auf. Die Handbedienung umfasst manuell betätigbare Bedienelemente auf. Als Reaktion der Betätigung der Bedienelemente werden Schaltvorgänge zum Betrieb von elektrischen Verbrauchern ausgelöst. Unter elektrische Verbraucher sind Möbelantriebe der eingangs genannten Art zu verstehen, welche ein daran angeschlossenes Möbelbauteil elektromotorisch relativ zueinander verstellen. Die Übertragung der Steuerbefehle der Bedienelemente erfolgt über eine drahtgebundene oder über eine drahtlose Übertragungsstrecke. Drahtlose Übertragungsstrecken können infrarotes Licht aufweisen. Drahtlose Übertragungsstrecken sind Funkübertragungsstrecken nach proprietärer Art, alternativ kommen WLAN, Bluetooth, ZigBee oder dergleichen in Betracht.

Eine Steuerungseinrichtung umfasst elektromechanische Schaltelemente in Form von Relais- oder Halbleiterschaltern zum Beaufschlagen eines Verbrauches mit elektrischer Spannung als Reaktion eines Betätigens eines Bedienelements. Alternativ kann die Beaufschlagung eines elektrischen Verbrauchers mit Spannung als Reaktion eines Ereignisses sein. In Betracht kommende Steuerungen umfassen eine hartverdrahtete Steuerlogik. Moderne Steuerungen umfassen softwaregesteuerte Mikrokontroller zum Auswerten von Eingangsgrößen wie beispielsweise von Ereignissen oder Betätigen von Bedienelementen und zum Steuern von elektromechanischen Schaltelementen zum Schalten und Beaufschlagen von Verbrauchern mit Spannung.

Eine Stromversorgungseinheit, z.B. ein Netzteil, kann als separate Einheit in einem eigenen Gehäuse der erfindungsgemäßen Art angeordnet sein. Alternativ kann eine Stromversorgungseinrichtung in der genannten Steuerungseinrichtung integriert sein. Ein Netzteil weist einen primärseitigen Eingang zum Anschluss an die Netzspannung auf, sowie einen Trenntransformator oder Hochfrequenz-Übertrager zum Erzeugen einer kleineren sekundärseitigen Ausgangsspannung zum Zwecke des Betriebs zumindest der Steuerung und des mindestens einen Möbelantriebs.

Die Erfindung wird nachfolgend anhand von Ausführungsbeispielen mithilfe von Figuren näher erläutert. Die Figuren zeigen:
- Figur 1a: eine isometrische Ansicht eines Möbelantriebs mit einem Gehäuse, dessen Gehäusehalbschalen zusammengesetzt, aber noch nicht miteinander verbunden sind;
- Figur 1b: ein vergrößerter Ausschnitt aus Figur 1a;
- Figur 2a: eine isometrische Ansicht des Möbelantriebs der Figur 1a mit verbundenen Gehäusehalbschalen;
- Figur 2b: ein vergrößerter Ausschnitt aus Figur 2a;
- Figur 3: eine isometrische Ansicht eines weiteren Ausführungsbeispiel eines Möbelantriebs mit einem Gehäuse mit verbundenen Gehäusehalbschalen; und
- Figur 4a, b: jeweils eine isometrische Ansicht eines Gehäuses einer Steuerungseinrichtung eines Möbelantriebs mit verbundenen Gehäusehalbschalen.

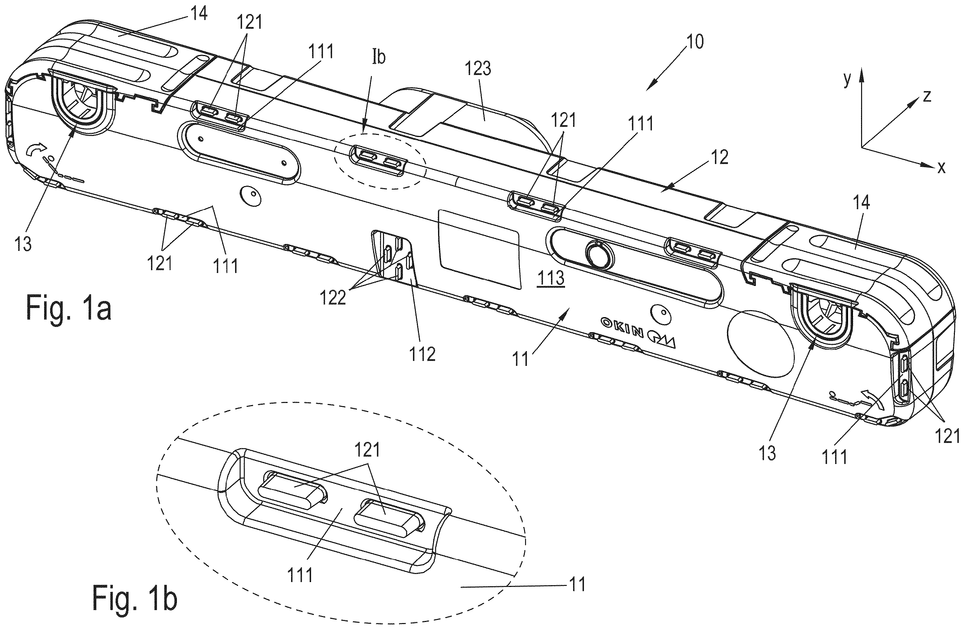

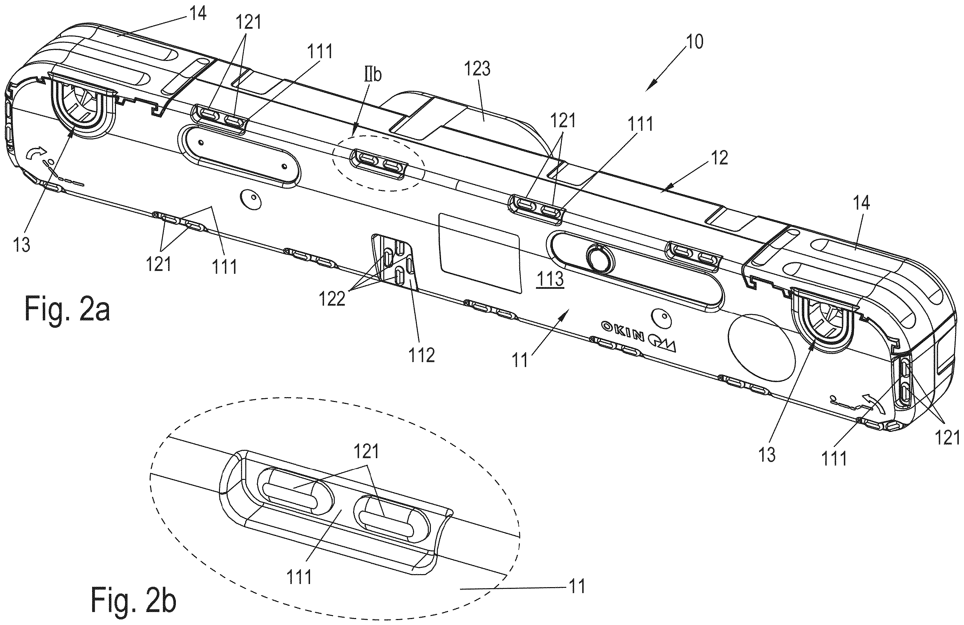

In den Figuren 1a und 2a ist ein Ausführungsbeispiel eines Möbelantriebs mit einem anmeldungsgemäßen Gehäuse 10 in jeweils einer isometrischen Gesamtansicht dargestellt.

Das Gehäuse 10 ist bezüglich seiner Grundform im Wesentlichen quaderförmig mit einer Längserstreckung in einer ersten Richtung, nachfolgend als x-Richtung bezeichnet, die die Erstreckung in den dazu senkrechten y- bzw. z-Richtungen deutlich übersteigt.

Das Gehäuse 10 ist aus zwei gehäuseteilen, hier Gehäusehalbschalen aufgebaut, einer ersten Gehäusehalbschale 11 und einer zweiten Gehäusehalbschale 12, wobei eine Trennlinie zwischen den beiden Gehäusehalbschalen 11, 12 in der xy-Ebene verläuft. Bevorzugt sind die Gehäusehalbschale 11, 12 aus Kunststoff in einem Spritzgussverfahren hergestellt.

In den Endbereichen (in Längserstreckungsrichtung gesehen) des Gehäuses 10 sind Achsaufnahmen 13 angeordnet, in denen jeweils eine in z-Richtung ausgerichtete Schwenkachse eines Möbels gelagert wird. Zum Einsetzten der Schwenkachse in die Achsaufnahme 13 ist jeweils ein abnehmbarer Schieber 14 vorgesehen, der die Achsaufnahme 13 übergreift. Der Schieber 14 wird in entsprechend geformte und hinterschnittene Nuten der Gehäusehalbschalen 11, 12 geschoben. Bevorzugt ist ein Einschieben in z-Richtung vorgesehen, wobei zusätzlich eine Verrastung zwischen den Schiebern 14 und den Gehäusehalbschalen 11, 12 vorgesehen sein kann.

Die in die Achsaufnahmen 13 eingesetzten Schwenkwellen weisen einen dann innerhalb des Gehäuses 10 liegenden Schwenkhebel auf, der vom dargestellten Möbelantrieb mit Kraft beaufschlagt wird, wodurch die Schwenkwellen zur Verstellung von Möbelteilen gedreht werden. Eine typische Anwendung findet der dargestellte Möbelantrieb in Zusammenhang mit einem Lattenrost eines Bettes als Möbel. Die beiden Schwenkwellen sind mit einem Kopf- bzw. einem Fußteil des Lattenrosts verbunden, die durch Verschwenken der Schwenkwellen entsprechend angehoben oder abgesenkt werden können. Der Möbelantrieb betätigt die Schwenkwellen und ist gleichzeitig an ihnen festgelegt. Eine darüber hinausgehende Bestfestigung des Möbelantriebs am Möbel ist nicht erforderlich. Im Betrieb ist der Möbelantrieb im Wesentlichen so ausgerichtet, dass die eingezeichnete xz-Ebene horizontal und die xy-Ebene vertikal verläuft.

Im Gehäuse 10 sind zwei Antriebseinheiten angeordnet, die jeweils einen elektrischen Antriebsmotor aufweisen, der über jeweils ein Getriebe auf eine Spindel wirkt. Die Getriebe können beispielsweise als Schneckengetriebe ausgebildet sein. Eine Drehung der Antriebswelle des Antriebsmotors wird über eine auf der Antriebswelle angeordnete Schnecke auf ein bevorzugt schräg verzahntes Zahnrad des Getriebes übertragen. Das genannte Zahnrad ist drehfest mit der jeweiligen Spindel verbunden, so dass diese mit untersetzter Drehzahl durch den Antriebsmotor rotiert werden kann. Auf das dem Getriebe jeweils gegenüberliegenden freien Ende der Spindel ist ein Abtriebsglied, z.B. ein Druckschieber aufgesetzt, in den die Spindel einfährt. Die Druckschieber sind jeweils in x-Richtung verschiebbar im Gehäuse gleitgelagert, wobei durch die Lagerung eine Verdrehung der Druckschieber verhindert ist. Auf den Druckschieber ist ein Druckkopf aufgesetzt, an dem der eingesetzte Schwenkhebel anliegt und der Kraft auf diesen Schwenkhebel überträgt, um die Schwenkachsen zu verschwenken.

An der zweiten Gehäusehalbschale 12 steht ein Motordom 123 über die Seitenfläche hervor. Der Motordom 123 deckt seitlich über die Seitenfläche hinausragende Motorgehäuse ab, wobei bei dem dargestellten Ausführungsbeispiel ein einzelner Motordom 123 vorgesehen ist, der die Gehäuse von zwei nebeneinander angeordneten Antriebsmotoren übergreift.

Das in diesem Ausführungsbeispiel dargestellte Gehäuse 10 ist zur Verbindung seiner Gehäusehalbschalen 11,12 heißvernietet. Zu diesem Zweck sind in der ersten Gehäusehalbschale Mulden 111 bzw. 112 vorgesehen, in denen Öffnungen (Durchbrüche) angeordnet sind. Die zweite Gehäusehalbschale 12 weist an den Positionen der Öffnungen Fortsätze auf, die bei dem zusammengesetzten Gehäuse durch die Öffnungen ragen. Bei dem dargestellten Ausführungsbeispiel sind die Fortsätze als Laschen 121, 122 ausgebildet. Grundsätzlich sind jedoch auch andere Formen, beispielsweise Bolzen möglich. Laschen 121, 122 bieten den Vorteil einer großen Verbindungsfläche.

Figur 1a zeigt das Gehäuse 10 unmittelbar nach dem Zusammensetzen der Gehäusehälften 11, 12. In Figur 1b ist eine der Mulden 11 vergrößert dargestellt. Die leicht konisch zulaufenden Laschen 121 sind durch die zugeordneten Öffnungen gesteckt und weisen noch ihre ursprüngliche Form auf.

In dem in den Figuren 1a und 1b gezeigten Zustand kann vorteilhaft eine Funktionskontrolle des elektromotorischen Möbelantriebs oder zumindest eines Teils seiner Komponenten erfolgen. Die Funktionskontrolle wird so unter realen Bedingungen vorgenommen, insbesondere bei endgültiger Position der im Gehäuse 10 angeordneten Komponenten, einschließlich ihrer Verkabelung. Falls sich Fehler oder Anomalien zeigen, kann das Gehäuse leicht geöffnet werden und die festgestellten Probleme können beseitigt werden.

In dem Zustand, den die Figuren 1a und 1b zeigen, werden dann die Laschen 121, 122 bei Fixierung der Gehäusehalbschalen 11, 12 möglichst selektiv erwärmt, bis ihr Kunststoffmaterial teigig bis fließfähig ist. Dann werden die Laschen 121, 122 mit einem möglichst gekühlten Stempel zu einem Nietkopf verformt. Der Zustand nach dem Verformen ist in den Figuren 2a und 2b in gleicher Weise wie in den Figuren 1a und 1b dargestellt. Nach Abkühlung ist die Verbindung der Gehäusehalbschalen 11, 12 unmittelbar belastbar.

Die Köpfe der Laschen 121, 122 können zum Verformen mit Strahlungswärme durch Heizelemente, z.B. Infrarotstrahler, erwärmt werden oder auch über einen Wärmekontakt mit einem entsprechend geformten Werkzeug. Besonders bevorzugt ist jedoch eine Erwärmung über das Zuführen von heißem Gas, z.B. Luft, mittels einer Düsenanordnung mit einer Mehrzahl von ggf. feinen Düsen. Auf diese Weise kann die Wärme sehr genau lokalisiert appliziert werden.

Bei dem dargestellten Ausführungsbeispiel sind derartige Nietverbindungen mit den Mulden 111 und den Laschen 121 entlang des Rands des Gehäuses 10 angeordnet. Weitere Nietverbindungen sind auf der Seitenfläche 113 in der Mulde 112 mit den Laschen 122 vorgesehen. Diese zusätzliche Verbindung ist im Bereich der Antriebsmotoren gegenüber dem Motordom 123 positioniert, um die hier besonders großen auf die Gehäusehalbschalen 11, 12 wirkenden Kräfte aufnehmen und ableiten zu können.

Die aufeinanderliegenden äußeren Kanten der Gehäusehalbschalen 11, 12 bilden Stoßflächen, die so profiliert sein können, dass eine Dichtung der beiden Gehäusehalbschalen 11, 12 zueinander erfolgt. Dieses ist beispielsweise durch Ausbilden von Nut und Feder an den Stoßflächen möglich. Zusätzlich zu den Nietverbindungen kann vorgesehen sein, die Gehäusehalbschalen 11, 12 entlang der Stoßflächen zu verschweißen oder zu verkleben. Ein Verschweißen von Gehäusehalbschalen 11, 12, die aus thermoplastischen Kunststoff gefertigt sind, kann in einem Ultraschallprozess oder einem thermischen Prozess entlang der Verbindungslinien der Gehäusehalbschalen 11, 12 erfolgen. Dabei kann eine Profilierung, beispielsweise eine Fase, entlang der Kanten der Gehäusehalbschalen 11, 12 vorgesehen sein, durch die verhindert wird, dass eine Schweißnaht nach außen hervorsteht, bzw. durch die ein Überstand vermindert wird.

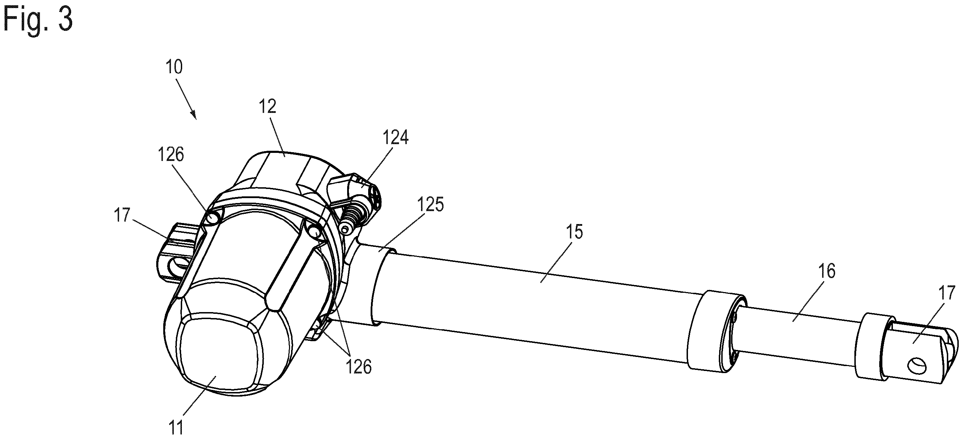

Figur 3 zeigt ein weiteres Ausführungsbeispiel eines anmeldungsgemäßen Gehäuses 10 eines Möbelantriebs in einer isometrischen Gesamtansicht. Im Unterschied zu dem Beispiel der Figuren 1a und 2a ist vorliegend ein sogenannter Einzelantrieb gezeigt, der nur einen Antriebsstrang zur Verstellung eines Möbelteils aufweist.

Wiederum ist das Gehäuse 10 zweiteilig ausgebildet. Es weist eine erste Gehäusehalbschale 11 auf, die vorliegend im Wesentlichen einen Antriebsmotor des dargestellten Möbelantriebs aufnimmt und daher die Form eines Motordoms hat. Mit der ersten Gehäusehalbschale 11 ist eine zweite Gehäusehalbschale 12 verbunden, in der eine Getriebeeinheit des elektromotorischen Möbelantriebs angeordnet ist. Der Antriebsmotor der ersten Gehäusehalbschale 11 wirkt mit der Getriebeeinheit in der zweiten Gehäusehalbschale 12 zusammen.

An der zweiten Gehäusehalbschale 12 ist neben einem elektrischen Anschluss 124 eine Aufnahme 125 für ein Flanschrohr 15 angeordnet. In diesem Flanschrohr ist verschiebbar gelagert ein Hubrohr 16 geführt, an dessen Ende ein Gabelkopf 17 angeordnet ist. Ein weiterer Gabelkopf 17 ist an der der Aufnahme 125 gegenüber liegenden Seite der zweiten Gehäusehalbschale 12 fest mit dieser verbunden.

Beim Einbau in ein Möbel sind die beiden Gabelköpfe 17 mit einem festen bzw. einem dazu beweglichen Möbelteil verbunden. Betätigung des Antriebsmotors führt über die Getriebeeinheit und einen Spindelantrieb zu einem Verfahren des Hubrohrs 16, das entsprechend in das Flanschrohr 15 einfährt oder aus dem Flanschrohr 15 herausfährt.

In ähnlicher Weise wie bei dem in Figuren 1a und 2a dargestellten Ausführungsbeispiel sind die beiden Gehäusehalbschalen 11, 12 über ein Heißnietverfahren miteinander verbunden. Dazu weist die zweite Gehäusehalbschale 12 Fortsätze auf, die durch Durchbrüche in der ersten Gehäusehalbschale 11 geführt sind und die nach dem Durchführen heißverformt sind. Vorliegend sind die Fortsätze nicht Laschen (vgl. Laschen 121, 122 in den Figuren 1a, b und 2a, b), sondern Bolzen 126 mit einem runden Querschnitt. Es versteht sich, dass anstelle der Bolzen 126 vorliegend auch Laschen verwendet werden könnten, bzw. das beim Ausführungsbeispiel der Figuren 1a und 2a anstelle der Laschen 121, 122 auch entsprechende Bolzen eingesetzt werden könnten.

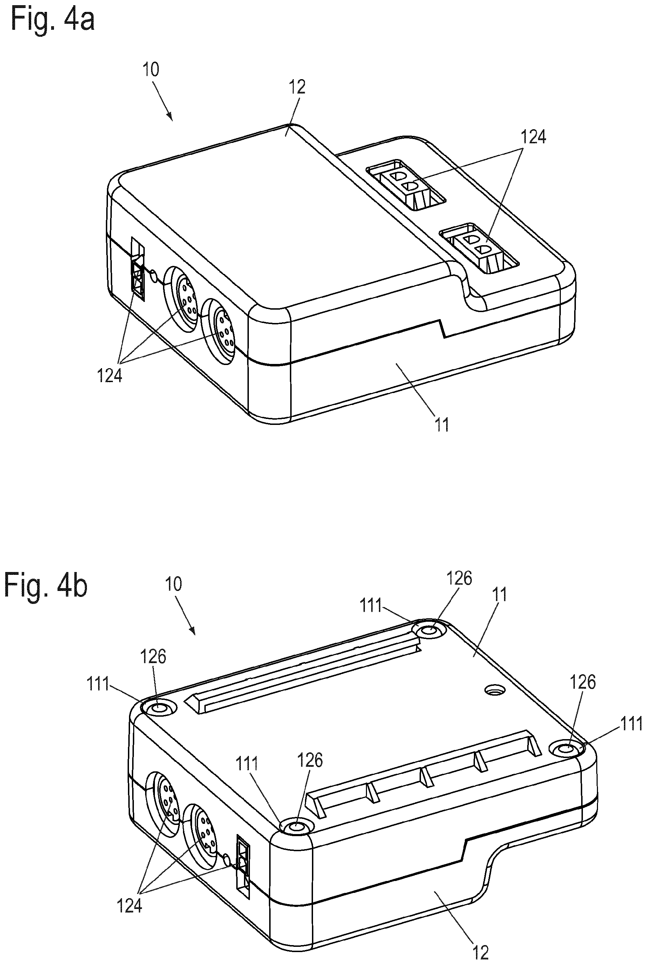

Ein weiteres Ausführungsbeispiel eines Gehäuses 10, das zwei Gehäusehalbschalen 11, 12 aufweist, die mittels eines Heißnietverfahrens miteinander verbunden sind, ist in den Figuren 4a und 4b dargestellt.

Das Gehäuse 10 dieses Ausführungsbeispiels nimmt eine Steuerungseinrichtung mit elektrischen Anschlüssen 124 als Komponente eines elektromotorischen Möbelantriebs auf. Figur 4a zeigt eine Schrägansicht auf eine Oberseite des Gehäuses 10 und Figur 4b eine Ansicht der zugehörigen Unterseite.

Wie in Figur 4b zu erkennen ist, sind wiederum Bolzen 126 der zweiten Gehäusehalbschale 12 durch entsprechende Durchbrüche der ersten Gehäusehalbschale 11 geführt und dann durch Verformung aufgeweitet. Ähnlich wie beim Ausführungsbeispiel der Figuren 1a und 2a sind in der ersten Gehäusehalbschale 11 Mulden 111 angeordnet, in denen die verformten Köpfe der Bolzen 126 versenkt sind.

### Bezugszeichenliste

- 10: Gehäuse

- 11: erste Gehäusehalbschale
- 111: Mulde
- 112: Mulde
- 113: Seitenfläche

- 12: zweite Gehäusehalbschale
- 121: Lasche
- 122: Lasche
- 123: Motordom
- 124: Anschluss
- 125: Aufnahme für Flanschrohr
- 126: Bolzen

- 13: Achsaufnahme für Schwenkachse des Möbels

- 14: Schieber

- 15: Flanschrohr

- 16: Hubrohr

- 17: Gabelkopf

## Patentansprüche

1. Elektromotorischer Möbelantrieb zur Verstellung von mindestens einem Möbelteil eines Möbels mit mindestens einer Antriebseinheit (20) und mit einem Gehäuse (10) mit mindestens zwei Gehäuseteilen (11, 12) **dadurch gekennzeichnet, dass** eines der Gehäuseteile (11, 12) Fortsätze (121, 122, 126) aufweist, die zugeordnete Durchbrüche in dem anderen Gehäuseteil (11, 12) durchdringen und die durch eine thermomechanische Behandlung nach dem Zusammensetzen der Gehäuseteile (11, 12) verformt sind, wobei eine Linien- oder Flächendichte der Fortsätze (121, 122, 126) in mechanisch stark beanspruchten Bereichen des Gehäuses (10) erhöht ist.

2. Elektromotorischer Möbelantrieb nach Anspruch 1, bei dem die Gehäuseteile Gehäusehalbschalen (11, 12) sind.

3. Elektromotorischer Möbelantrieb nach Anspruch 1 oder 2, bei dem die Fortsätze Bolzen (126) oder Laschen (121, 122) sind.

4. Elektromotorischer Möbelantrieb nach einem der Ansprüche 1 bis 3, bei dem die Fortsätze (121, 122, 126) thermisch mittels Strahlungswärme, mittels Heißgas oder mittels Ultraschall behandelt sind.

5. Elektromotorischer Möbelantrieb nach einem der Ansprüche 1 bis 4, bei dem die Fortsätze (121, 122, 126) in einem heißen Zustand mechanisch verpresst sind.

6. Elektromotorischer Möbelantrieb nach einem der Ansprüche 2 bis 5, bei dem die Fortsätze (121, 122, 126) verteilt entlang eines Rands der Gehäusehalbschalen (11, 12) angeordnet sind.

7. Elektromotorischer Möbelantrieb nach einem der Ansprüche 2 bis 6, bei dem die Fortsätze (121, 122, 126) verteilt auf Seitenflächen der Gehäusehalbschalen (11, 12) angeordnet sind.

## Claims

1. An electromotive furniture drive for adjusting at least one furniture part of a piece of furniture, having at least one drive unit (20) and having a housing (10) having at least two housing parts (11, 12),
**characterized in that** one of the housing parts (11, 12) has extensions (121, 122, 126) which penetrate associated passages in the other housing part (11, 12) and are deformed by a thermomechanical treatment after the assembly of the housing parts (11, 12), wherein a linear or area density of the extensions (121, 122, 126) is increased in strongly mechanically strained regions of the housing (10).

2. The electromotive furniture drive according to Claim 1, in which the housing parts are housing half-shells (11, 12).

3. The electromotive furniture drive according to Claim 1 or 2, in which the extensions are pins (126) or tabs (121, 122).

4. The electromotive furniture drive according to any one of Claims 1 to 3, in which the extensions (121, 122, 126) are thermally treated by means of radiation heat, by means of hot gas, or by means of ultrasound.

5. The electromotive furniture drive according to any one of Claims 1 to 4, in which the extensions (121, 122, 126) are mechanically compressed in a hot state.

6. The electromotive furniture drive according to any one of Claims 2 to 5, in which the extensions (121, 122, 126) are arranged distributed along a periphery of the housing half-shells (11, 12).

7. The electromotive furniture drive according to any one of Claims 2 to 6, in which the extensions (121, 122, 126) are arranged distributed on lateral faces of the housing half-shells (11, 12).

## Revendications

1. Entraînement à moteur électrique de meuble pour le déplacement d'au moins une partie d'un meuble avec au moins une unité d'entraînement (20) et avec un boîtier (10) comportant au moins deux parties de boîtier (11, 12), **caractérisé en ce que** l'une des parties de boîtier (11, 12) présente des saillies (121, 122, 126) qui traversent des ouvertures correspondantes dans l'autre partie de boîtier (11, 12) et qui sont déformées par une action thermomécanique après l'assemblage des parties de boîtier (11, 12), la densité linéaire et superficielle des saillies (121, 122 126) étant augmentée dans les parties du boîtier (10) soumises à de fortes contraintes thermomécaniques.

2. Entraînement à moteur électrique de meuble selon la revendication 1, dans lequel les parties de boîtier sont des demi-coques de boîtier (11, 12).

3. Entraînement à moteur électrique de meuble selon la revendication 1 ou 2, dans lequel les saillies sont des goujons (126) ou des pattes (121, 122).

4. Entraînement à moteur électrique de meuble selon l'une des revendications 1 à 3, dans lequel les saillies (121, 122, 126) sont soumises à un traitement thermique au moyen de chaleur rayonnée, au moyen de gaz chaud ou au moyen d'ultrasons.

5. Entraînement à moteur électrique de meuble selon l'une des revendications 1 à 4, dans lequel les saillies (121, 122, 126) sont pressées mécaniquement alors qu'elles sont chaudes.

6. Entraînement à moteur électrique de meuble selon l'une des revendications 2 à 5, dans lequel les saillies (121, 122, 126) sont réparties le long d'un bord des demi-coques de boîtier (11, 12).

7. Entraînement à moteur électrique de meuble selon l'une des revendications 2 à 6, dans lequel les saillies (121, 122, 126) sont réparties sur des surfaces latérales des demi-coques de boîtier (11, 12).
